# EUROPEAN PATENT SPECIFICATION

(11) **EP 3 997 533 B1**
(45) Date of publication and mention of the grant of the patent: **22.05.2024**
(21) Application number: 20753510.5
(22) Date of filing: 10.07.2020
(51) Int. Cl.: G05B 23/00, G01N 3/00, G01N 3/02

(54) **METHODS AND APPARATUS TO CONTROL STAGING OF TEST SPECIMENS**
VERFAHREN UND VORRICHTUNG ZUR STEUERUNG DER STUFUNG VON PRÜFKÖRPERN
PROCÉDÉS ET APPAREIL DE COMMANDE D'ÉCHELONNAGE D'ÉPROUVETTES

(30) Priority: 12.07.2019 US 201916510280
(43) Date of publication of application: 18.05.2022
(73) Proprietor: Illinois Tool Works Inc., Glenview, IL 60025 (US)
(72) Inventor: NICOL, Scott, Glenview, IL 60025 (US); MORSE, Jason, Glenview, IL 60025 (US); JACKSON, Christopher, Glenview, IL 60025 (US)
(74) Representative: HGF
(86) International application number: PCT/US2020/041555
(87) International publication number: WO 2021/011359

(56) References cited:
- JP-A- 2015 008 224
- US-A1- 2016 299 498

## Description

### BACKGROUND

This disclosure relates generally to materials testing, and more particularly, to methods and apparatus to control staging of test specimens.

In testing systems, test stages may be used to physically position one or more test specimens for physical, electrical, and/or other types of testing. JP2015008224A relates to a technique for optimizing the inspection order of a length-measuring point capable of improving a through-put to the maximum extent while keeping the reproducibility of measured length at the length-measuring point on a sample when thermal deformation is generated in the sample. US2016/299498A1 relates to a camera enabled navigation system for a material testing apparatus, comprising a camera, a movable stage, a display, an interface device, a processor, a data storage and a sensor head.

### SUMMARY

Methods and apparatus to control staging of test specimens are disclosed, substantially as illustrated by and described in connection with at least one of the figures, as set forth more completely in the claims.

### BRIEF DESCRIPTION OF THE DRAWINGS

These and other features, aspects, and advantages of the present disclosure will become better understood when the following detailed description is read with reference to the accompanying drawings in which like characters represent like parts throughout the drawings, wherein:
FIG. 1 is a block diagram of an example test system to perform mechanical property testing on one or more test specimens affixed to a test stage, in accordance with aspects of this disclosure.
FIG. 2 is a block diagram of an example implementation of the test system of FIG. 1.
FIG. 3 illustrates an example user interface that may be used to implement the user interface of FIG. 2 to define a test sequence including test points and/or test paths, and to display a graphic indicative of the test sequence.
FIG. 4 is a flowchart representative of example machine readable instructions which may be executed to implement the test system of FIGS. 1-3 to define and perform a test sequence with a test stage.

The figures are not necessarily to scale. Wherever appropriate, similar or identical reference numerals are used to refer to similar or identical components.

### DETAILED DESCRIPTION

Example test stages may move test specimens in one or more linear dimensions (e.g., X stages, Y stages, or Z stages for a single dimension; XY stages, XZ stages, or YZ stages for two dimensions; XYZ stages for three dimensions), in circular and/or polar movements, rotational movement, and/or any other desired movement and/or positioning. Test stages may include fixturing to affix the one or more specimens, depending on the nature of the specimen and/or the type of test(s) (e.g., compression, tension, torsion, flexure, etc.) and/or operation(s) (e.g., assays) to be performed.

In contrast with conventional test systems utilizing test stages, the test systems according to the invention provide clear indications to the operator(s) of the number and locations of test points in a test sequence, as well as the paths between the test points. They display a graphic representing the test stage, and overlay the locations of the test points and the paths between the test points on the graphic to quickly indicate to the operator the precise test sequence. As a result, disclosed example test systems provide substantial improvements in accuracy and operator efficiency when defining test sequences.

According to the invention, systems perform automated testing of one or more specimens, and include: a stage configured to secure one or more test specimens; one or more actuators configured to position the stage and the one or more test specimens; a user interface configured to: receive input defining a test sequence of a plurality of points to be tested on the one or more test specimens; and display a graphic indicative of positions of the plurality of points on the one or more test specimens and one or more paths to be taken by the stage to traverse the plurality of points during testing of the test sequence; and control circuitry configured to control a test process of the test sequence in accordance with the plurality of points and the one or more paths.

In some examples, the control circuitry is configured to calculate the path based on the plurality of points. In some example systems, the input defining the plurality of points includes at least one of: coordinates of the plurality of points on the stage, a number of rows of the plurality of points, a number of columns of the plurality of points, a number of the plurality of points, dimensions of the one or more test specimens, a position of an initial one of the plurality of points, a position of a final one of the plurality of points, or a change in position between sequential ones of the plurality of points. In some example systems, the input is a direct selection of one or more of the plurality of points via an input device. In some such examples, the input device includes at least one of a joystick, a mouse, or a touchscreen.

According to the invention, the user interface is configured to display the graphic as a grid representative of the stage, the plurality of points overlaid on the stage, and the one or more paths connecting the plurality of points. In some examples, the user interface is configured to display sequential indicia associated with the plurality of points to indicate an order in which the plurality of points are to be tested during the test process. In some examples, the user interface is configured to indicate an initial point of the plurality of points and to display the one or more paths using one or more directional indicators.

In some example systems, the user interface is configured to indicate that one or more of the plurality of points are outside bounds of the stage. In some example systems, the user interface is configured to indicate a current position of the stage via the graphic. In some examples, the user interface is configured to display a second graphic representative of an entirety of the stage. In some example systems, the stage is configured to move the test specimen at least one of linearly, rotationally, or radially. In some examples, the control circuitry is configured to control the stage actuator using at least one of: Euclidean coordinates having one or more dimensions, polar coordinates, circular coordinates, spherical coordinates, or cylindrical coordinates.

According to the invention, methods to perform automated testing of one or more specimens, include: securing one or more test specimens to a test stage; receiving, via a user interface, input defining a test sequence of a plurality of points to be tested on the one or more test specimens; displaying, via the user interface, a graphic indicative of positions of the plurality of points on the one or more test specimens and one or more paths to be taken by the stage to traverse the plurality of points during testing of the test sequence; and performing, via control circuitry and, a test process of the test sequence by controlling a stage actuator to move the test stage in accordance with the plurality of points and the one or more paths.

In some example methods, the input defining the plurality of points comprises at least one of: coordinates of the plurality of points on the stage, a number of rows of the plurality of points, a number of columns of the plurality of points, a number of the plurality of points, dimensions of the one or more test specimens, a position of an initial one of the plurality of points, a position of a final one of the plurality of points, or a change in position between sequential ones of the plurality of points. According to the invention, the displaying of the graphic includes displaying the graphic as a grid representative of the stage, the plurality of points overlaid on the stage, and the one or more paths connecting the plurality of points.

In some example methods, the receiving of the input includes receiving a direct selection of one or more of the plurality of points via an input device. In some examples, the controlling of the stage actuator includes controlling the stage actuator to move the stage at least one of linearly, rotationally, or radially. Some example methods further include indicating, via the user interface, that one or more of the plurality of points are outside bounds of the stage.

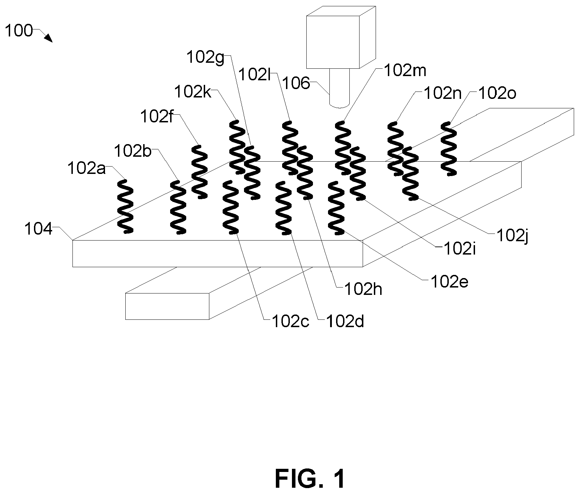

FIG. 1 is a block diagram of an example test system 100 to perform mechanical property testing on one or more test specimens 102a-102o that are affixed to a test stage 104. The example test stage 104 of FIG. 1 is an XY stage, which positions the test specimens 102a-102o below a test element 106 (e.g., a compression tester, a tension tester, a torsion tester, a flexural tester, etc.). In some examples, the test stage 104 may hold a single specimen, on which multiple locations on the single specimen may be positioned below the test element 106 for testing or other operations (e.g., assaying).

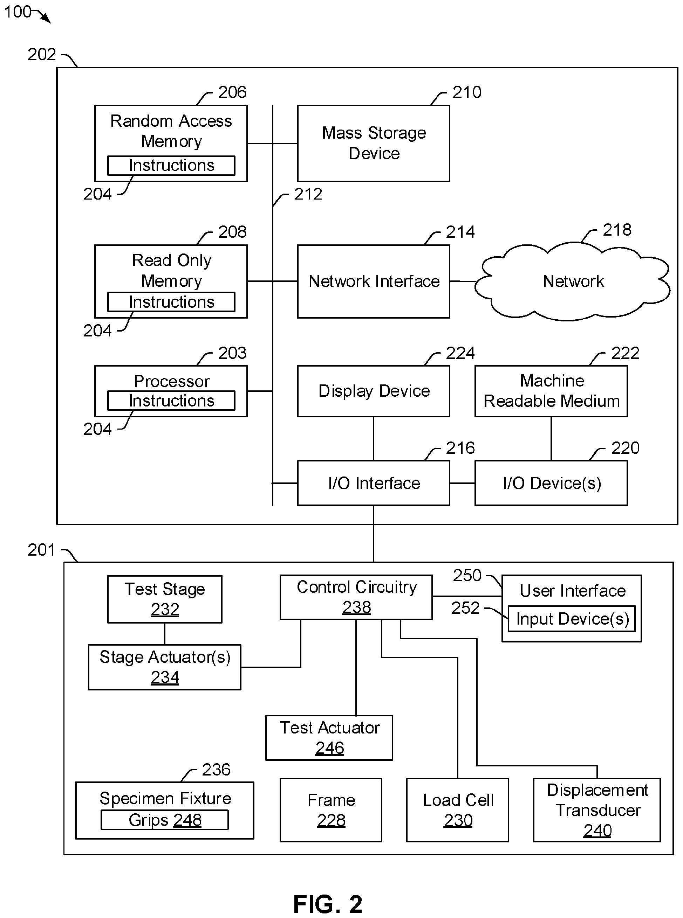

FIG. 2 is a block diagram of an example implementation of the test system 100 of FIG. 1. As illustrated in FIG. 2, the test system 100 includes a test fixture 201 and a computing device 202.

The example computing device 202 may be a general-purpose computer, a laptop computer, a tablet computer, a mobile device, a server, an all-in-one computer, and/or any other type of computing device. The computing device 202 of FIG. 2 includes a processor 203, which may be a general-purpose central processing unit (CPU). In some examples, the processor 203 may include one or more specialized processing units, such as FPGA, RISC processors with an ARM core, graphic processing units, digital signal processors, and/or system-on-chips (SoC). The processor 203 executes machine-readable instructions 204 that may be stored locally at the processor (e.g., in an included cache or SoC), in a random access memory 206 (or other volatile memory), in a read-only memory 208 (or other non-volatile memory such as FLASH memory), and/or in a mass storage device 210. The example mass storage device 210 may be a hard drive, a solid-state storage drive, a hybrid drive, a RAID array, and/or any other mass data storage device. A bus 212 enables communications between the processor 203, the RAM 206, the ROM 208, the mass storage device 210, a network interface 214, and/or an input/output interface 216.

An example network interface 214 includes hardware, firmware, and/or software to connect the computing device 202 to a communications network 218 such as the Internet. For example, the network interface 214 may include IEEE 802.X-compliant wireless and/or wired communications hardware for transmitting and/or receiving communications.

An example I/O interface 216 of FIG. 2 includes hardware, firmware, and/or software to connect one or more input/output devices 220 to the processor 203 for providing input to the processor 203 and/or providing output from the processor 203. For example, the I/O interface 216 may include a graphics-processing unit for interfacing with a display device, a universal serial bus port for interfacing with one or more USB-compliant devices, a FireWire, a field bus, and/or any other type of interface. The example test system 100 includes a display device 224 (e.g., an LCD screen) coupled to the I/O interface 216. Other example I/O device(s) 220 may include a keyboard, a keypad, a mouse, a trackball, a pointing device, a microphone, an audio speaker, a display device, an optical media drive, a multi-touch touch screen, a gesture recognition interface, a magnetic media drive, and/or any other type of input and/or output device.

The computing device 202 may access a non-transitory machine-readable medium 222 via the I/O interface 216 and/or the I/O device(s) 220. Examples of the machine-readable medium 222 of FIG. 2 include optical discs (e.g., compact discs (CDs), digital versatile/video discs (DVDs), Blu-ray discs, etc.), magnetic media (e.g., floppy disks), portable storage media (e.g., portable flash drives, secure digital (SD) cards, etc.), and/or any other type of removable and/or installed machine-readable media.

The test fixture 201 is coupled to the computing device 202. In the example of FIG. 2, the test fixture 201 is coupled to the computing device via the I/O interface 216, such as via a USB port, a Thunderbolt port, a FireWire (IEEE 1394) port, and/or any other type serial or parallel data port. In some examples, the test fixture 201 is coupled to the network interface 214 and/or to the I/O interface 216 via a wired or wireless connection (e.g., Ethernet, Wi-Fi, etc.), either directly or via the network 218.

The test fixture 201 includes a frame 228, a load cell 230, a test stage 232 (e.g., the test stage 104 of FIG. 1), a stage actuator 234, specimen fixtures 236, a control circuitry 238, and a user interface 250. The frame 228 provides rigid structural support for the other components of the test fixture 201 that perform the test. The load cell 230 measures force applied to a specimen (e.g., the substrate 102) by a test actuator 246.

The example control circuitry 238 controls movement of the stage 232 based on a test sequence, which includes a set of multiple test points and paths between sequential test points. The example stage 232 may be configured to move linearly (e.g., Euclidean or Cartesian coordinates in one or more dimensions), rotationally (e.g., angular movement of the stage 232), and/or radially (e.g., inward and outward movement of the stage). The control circuitry 238 may be configured to control the stage actuator 234 using one or more of Euclidean coordinates having one or more dimensions, polar coordinates, circular coordinates, spherical coordinates, cylindrical coordinates, and/or any other coordinate system, and/or the user interface 250 may enable the operator to define the points and/or paths using the same coordinate system or a different coordinate system.

While the stage 232 and the stage actuator 234 are illustrated in FIG. 2 as part of the system 100, the stage 232 and/or the stage actuator 234 may be integral to the system 100 or added onto an existing system.

The test actuator 246 applies force to the specimen(s) and/or forces displacement of the specimen(s). In the example test system 100, the test element 106 is stationary in the XY directions, and the stage actuator 234 moves the stage 232 and the specimen(s) in the XY directions with respect to the test element 106 to enable the test element 106 to perform testing in the Z direction.

Example actuators that may be used to implement the stage actuator 234 and/or the test actuator 246 may include electric motors, pneumatic actuators, hydraulic actuators, piezoelectric actuators, relays, and/or switches. While the example test fixture 201 uses a motor, such as a servo or direct-drive linear motor, other systems may use different types of actuators. For example, hydraulic actuators, pneumatic actuators, and/or any other type of actuator may be used based on the requirements of the system.

The specimen fixture 236 affix the specimen(s) to the stage 232. For example, the specimen fixture 236 may include grips 248 such as jaw grips, platens, probes, clamps, and/or other types of fixtures, depending on the mechanical property being tested and/or the specimen. The grips 248 may be manually configured, controlled via manual input, and/or automatically controlled by the control circuitry 238.

The test system 100 further includes one or more user interfaces 250, including one or more input devices 252. The input devices 252 may include buttons, switches, and/or other input devices located on an operator control panel. For example, the input devices 252 may include buttons, a touch screen, a mouse, a joystick, and/or other types of input device(s). The input device(s) 252 may control operations of the test fixture 201, such as defining location(s) of test points, defining paths between test points, controlling the stage actuator(s) 234 to jog (e.g., position) the test stage 232 to a desired position, switches (e.g., foot switches) that control the grips 248 to close or open (e.g., via another actuator), and/or any other input devices to control operation of the test fixture 201.

The example control circuitry 238 communicates with the computing device 202 to, for example, receive test parameters from the computing device 202 and/or report measurements and/or other results to the computing device 202. For example, the control circuitry 238 may include one or more communication or I/O interfaces to enable communication with the computing device 202. The control circuitry 238 may control the stage actuator(s) 234 to move the test stage 232 so as to position the test points on the specimen adjacent (e.g., below) the test element 106 for testing during a test sequence. Additionally or alternatively, the control circuitry 238 may control the test actuator 246 to move in a given direction and/or to control the speed of the test actuator 246, control the grips 248 to grasp or release a specimen, and/or receive measurements from the displacement transducer 240, the load cell 230 and/or other transducers.

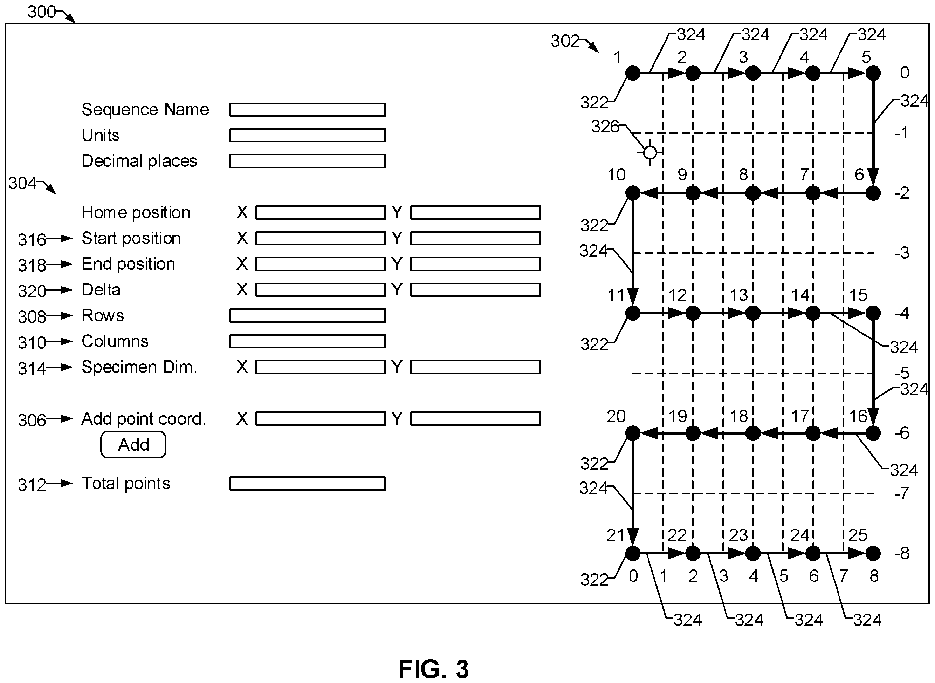

FIG. 3 illustrates an example user interface 300 that may be used to implement the user interface 250 and/or the display device 224 of FIG. 2 to define a test sequence including test points and/or test paths, and to display a graphic 302 indicative of the test sequence. The example user interface 300 includes inputs to define the test points. The example user interface 300 may be presented via a display screen (e.g., the display 224), a touch screen, and/or any other display method.

The interface 300 is configured to receive inputs 304 to define a test sequence, which includes a plurality of points to be tested on the one or more test specimens that are affixed to the stage 104 of FIG. 1. Example inputs illustrated in FIG. 3 include: a coordinate input 306 for one or more of the plurality of points on the stage, a number of rows 308 of the plurality of points, a number of columns 310 of the plurality of points, a number 312 of the plurality of points (e.g., a total number of points), a dimension input 314 for dimensions of the one or more test specimens, a position input 316 for a position (e.g., coordinates) of an initial one of the plurality of points, a position input 318 for a position (e.g., coordinates) of a final one of the plurality of points, or a change 320 (e.g., delta) in position between sequential ones of the plurality of points. Additionally or alternatively, the interface 300 may enable the operator to import and/or export sequences of points and/or paths from a file (e.g., via the mass storage device 210, the network interface 312, the I/O devices 220, and/or the machine readable medium 222 of FIG. 2).

The example coordinate inputs (e.g., inputs 306, 314, 316, 318, 320) include inputs for multiple dimensions (e.g., an X coordinate and a Y coordinate for an XY stage), but may include fewer or more inputs for different types of stages. In some examples, the coordinate inputs may be received with reference to a grid represented by the graphic 302, such as by directing a cursor to a desired point on the graphic 302 associated with a coordinate system and selecting the location. In response to the selection on the grid, the example control circuitry 328 may use the location as the input for a selected coordinate input (e.g., input 306, 314, 316, 318, or 320).

The example graphic 302 is indicative of positions of the plurality of points 322 (numbered 1-25 in the example of FIG. 3) on one or more test specimens, and one or more paths (e.g., arrows between sequential ones of the points 1-25) to be taken by the stage 104 to traverse the plurality of points 1-25 during testing of the test sequence. As illustrated in FIG. 3, the user interface 300 is configured to display the graphic 302 as a grid representative of the stage 104, in which the plurality of points 322 are overlaid on the stage, and the one or more paths 324 connect the plurality of points 322. The example graphic 302 displays sequential indicia, such as alphanumeric sequencing (e.g., 1, 2, 3, etc.; A, B, C, etc.; A1, A2, B1, B2, etc.), in association with the points 322 to indicate an order in which the points 322 are to be tested during the test process.

In some examples, the sequential indicia may be used to indicate the order instead of the illustrated arrows of FIG. 3. In some other examples, the arrows or similar path indicators may be used in conjunction with an indication of an initial point to display the one or more paths and the order, without using specific indicia to indicate the order.

As used herein, a "path" refers to a route existing between two or more of the points 1-25. In other words, the route from point 1 to point 2 may be considered a single path, and the route starting at point 1 and ending at point 25 may be considered a single path or multiple paths (e.g., 2 to 24 paths).

The example user interface 300 may indicate when one or more points entered via the user interface are outside of bounds of the stage. For example, if the operator enters coordinates that are outside of the stage 104 (e.g., according to the grid coordinate system representing the stage 104), the user interface 300 may display an alert, alarm, or other indication that the point is outside of the bounds of the stage 104.

In some examples, the user interface 300 may include (e.g., overlay) a stage position indicator 326 on the graphic 302 to represent a current position of the stage 104 (e.g., with respect to the test element 106).

The graphic 302 may represent the entirety of the stage 104 and/or a portion of the stage 104, such as defined dimensions of a specimen or area of interest. In some examples, when the graphic 302 represents a portion of the stage 104, the user interface 300 may enable the operator to zoom out, and display a second graphic representative of the entirety of the stage 104.

By displaying the graphic 302 to visually represent and indicate the positions of the points 322 and the paths 324, the example user interface 300 substantially improves the efficiency and accuracy with which the operator can define and implement a test sequence using a stage. In particular, the user interface 300 enables the user to quickly discern the number and arrangement of the points on the specimen, determine whether any points are outside the boundaries of the specimen and/or the stage 232, and/or determine whether improvements or corrections to a test sequence should be implemented.

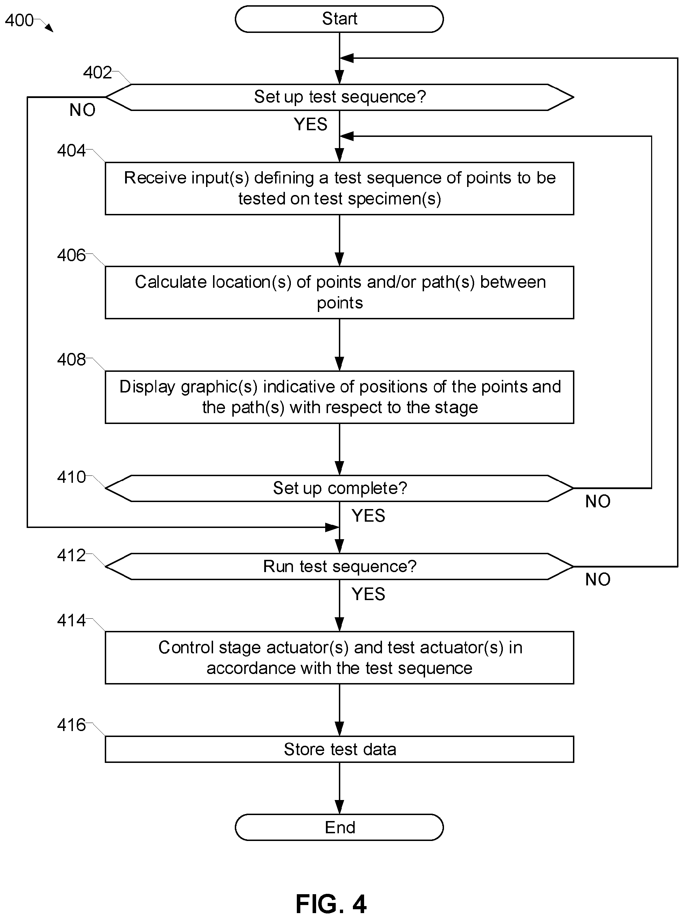

FIG. 4 is a flowchart representative of example machine readable instructions 400 which may be executed to implement the test system 100 of FIGS. 1-3 to define and perform a test sequence with a test stage. The instructions 400 may be executed by, for example, the control circuitry 238 and/or the processor 203 of FIG. 2 to define a test sequence, display the user interface 300 including the graphic 302 representative of the points and paths in the test sequence, and control the test fixture to perform the defined test sequence. The example instructions 400 are described below as executed by the control circuitry 238 of FIG. 2.

At block 402, the control circuitry 238 determines whether to set up a test sequence. For example, the control circuitry 238 may receive an input from a first menu to enter a test sequence interface (e.g., the user interface 300 of FIG. 3). If a test sequence is to be set up (block 402), at block 404 the control circuitry 238 receives one or more inputs defining a test sequence of points to be tested on one or more test specimens. For example, the control circuitry 238 may receive (e.g., via the user interface 250 of FIG. 2 and/or the user interface 300 of FIG. 3) one or more of: coordinates of the plurality of points on the stage, a number of rows of the plurality of points, a number of columns of the plurality of points, a number of the plurality of points, dimensions of the one or more test specimens, a position of an initial one of the plurality of points, a position of a final one of the plurality of points, or a change in position between sequential ones of the plurality of points.

At block 406, the control circuitry 238 calculates locations of points and/or paths between defined points. For example, when a number of rows are defined and a number of columns are defined, the control circuitry 238 may automatically define the coordinate locations of points corresponding to the defined numbers of rows and columns, and compute paths between the points. The control circuitry 238 may define points in accordance with rules, such as evenly spacing the points and/or obtaining a default representation of testing of a specimen. The computation of paths may be performed by the control circuitry 238 to, for example, maximize test efficiency, reduce total test time, and/or any other computational goal, and/or based on a default path scheme.

At block 408, the control circuitry 238 displays one or more graphic(s) (e.g., the graphic 302 of FIG. 3) indicative of positions of the points and the paths with respect to the stage 104. For example, the control circuitry 238 may display the graphic 302 to include one or more of: a grid representative of the stage 104, arrows 324 or other indicators of the path and/or a testing order of points 322, sequential indicia representative of the testing order of the points 322, and/or an indicator 326 of a current position of the stage 104 with respect to the test element 106.

At block 410, the control circuitry 238 determines whether setting up of the test sequence is compete. For example, an operator may elect to store the test sequence for subsequent retrieval and/or use by selecting a button to save or store the test sequence as defined in the user interface 300. If setting up of the test sequence is not complete (block 410), control returns to block 404 to continue receiving inputs to define the test sequence.

When set up is complete (block 410), or if the test sequence is not to be set up (block 402), at block 412 the control circuitry 238 determines whether the test sequence is to be run. For example, an operator may select to perform a defined test sequence via the user interface 250 of FIG. 2. If a test sequence is not to be performed (block 412), control returns to block 402.

If a test sequence is to be performed (block 412), at block 414 the control circuitry 238 controls the stage actuator(s) 234 and test actuator(s) 246 to perform the test sequence. For example, the control circuitry 238 may control the stage actuator(s) 234 to move the stage 232 based on the locations represented in the graphic displayed on the user interface 300, and control the test actuator 246 at each of the locations. During the test, the example control circuitry 238 may collect load data (e.g., via the load cell 230) and/or displacement data (e.g., via the displacement transducer 240. At block 416, the control circuitry 238 stores the test data, such as the collected load data and/or displacement data. The example instructions 400 may then end. In some examples, after performing the test, control may return to block 402 to determine whether another test sequence is to be defined.

The present methods and systems may be realized in hardware, software, and/or a combination of hardware and software. The present methods and/or systems may be realized in a centralized fashion in at least one computing system, or in a distributed fashion where different elements are spread across several interconnected computing systems. Any kind of computing system or other apparatus adapted for carrying out the methods described herein is suited. A typical combination of hardware and software may include a general-purpose computing system with a program or other code that, when being loaded and executed, controls the computing system such that it carries out the methods described herein. Another typical implementation may comprise an application specific integrated circuit or chip. Some implementations may comprise a non-transitory machine-readable (e.g., computer readable) medium (e.g., FLASH drive, optical disk, magnetic storage disk, or the like) having stored thereon one or more lines of code executable by a machine, thereby causing the machine to perform processes as described herein. As used herein, the term "non-transitory machine-readable medium" is defined to include all types of machine readable storage media and to exclude propagating signals.

As utilized herein the terms "circuits" and "circuitry" refer to physical electronic components (i.e. hardware) and any software and/or firmware ("code") which may configure the hardware, be executed by the hardware, and or otherwise be associated with the hardware. As used herein, for example, a particular processor and memory may comprise a first "circuit" when executing a first one or more lines of code and may comprise a second "circuit" when executing a second one or more lines of code. As utilized herein, "and/or" means any one or more of the items in the list joined by "and/or". As an example, "x and/or y" means any element of the three-element set {(x), (y), (x, y)}. In other words, "x and/or y" means "one or both of x and y". As another example, "x, y, and/or z" means any element of the seven-element set {(x), (y), (z), (x, y), (x, z), (y, z), (x, y, z)}. In other words, "x, y and/or z" means "one or more of x, y and z". As utilized herein, the term "exemplary" means serving as a non-limiting example, instance, or illustration. As utilized herein, the terms "e.g.," and "for example" set off lists of one or more non-limiting examples, instances, or illustrations. As utilized herein, circuitry is "operable" to perform a function whenever the circuitry comprises the necessary hardware and code (if any is necessary) to perform the function, regardless of whether performance of the function is disabled or not enabled (e.g., by a user-configurable setting, factory trim, etc.).

## Claims

1. A system (100) to perform automated testing of one or more specimens, the system comprising:
a stage (104) configured to secure one or more test specimens (102);
one or more actuators (234) configured to position the stage (104) and the one or more test specimens (102);
a user interface (250) configured to:
receive input defining a test sequence of a plurality of points (322) to be tested on the one or more test specimens; and
display a graphic indicative of positions of the plurality of points (322) on the one or more test specimens and one or more paths to be taken by the stage (104) to traverse the plurality of points during testing of the test sequence; and
control circuitry (238) configured to control a test process of the test sequence in accordance with the plurality of points (322) and the one or more paths,
**characterized in that** the user interface (250) is configured to display the graphic as a grid representative of the stage (104), the plurality of points (322) overlaid on the stage (104), and the one or more paths connecting the plurality of points (322).

2. The system (100) as defined in claim 1, wherein the control circuitry (238) is configured to calculate the path based on the plurality of points (322).

3. The system (100) as defined in claim 1, wherein the input defining the test sequence of the plurality of points (322) comprises at least one of: coordinates of the plurality of points on the stage, a number of rows of the plurality of points, a number of columns of the plurality of points, a number of the plurality of points, dimensions of the one or more test specimens, a position of an initial one of the plurality of points, a position of a final one of the plurality of points, or a change in position between sequential ones of the plurality of points.

4. The system (100) as defined in claim 1, wherein the input comprises a direct selection of one or more of the plurality of points (322) via an input device (252), optionally wherein the input device (252) comprises at least one of a joystick, a mouse, or a touchscreen.

5. The system (100) as defined in claim 1, wherein the user interface (250) is configured to display sequential indicia associated with the plurality of points (322) to indicate an order in which the plurality of points are to be tested during the test process.

6. The system (100) as defined in claim 1, wherein the user interface is configured to indicate an initial point of the plurality of points (322) and to display the one or more paths using one or more directional indicators.

7. The system as defined in claim 1, wherein the user interface is configured to indicate that one or more of the plurality of points are outside bounds of the stage.

8. The system (100) as defined in claim 1, wherein the user interface (250) is configured to indicate a current position of the stage (104) via the graphic, or wherein the user interface (250) is configured to display a second graphic representative of an entirety of the stage (104).

9. The system (100) as defined in claim 1, wherein the stage (104) is configured to move the test specimen at least one of linearly, rotationally, or radially.

10. The system (100) as defined in claim 9, wherein the control circuitry (238) is configured to control the stage actuator using at least one of: Euclidean coordinates having one or more dimensions, polar coordinates, spherical coordinates, or cylindrical coordinates.

11. A method to perform automated testing of one or more specimens (102), the method comprising:
securing one or more test specimens (102) to a test stage (104);
receiving, via a user interface (250), input defining a test sequence of a plurality of points (322) to be tested on the one or more test specimens (102);
displaying, via the user interface (250), a graphic indicative of positions of the plurality of points (322) on the one or more test specimens and one or more paths to be taken by the stage (104) to traverse the plurality of points (322) during testing of the test sequence; and
performing, via control circuitry (238) and, a test process of the test sequence by controlling a stage actuator (234) to move the test stage (104) in accordance with the plurality of points (322) and the one or more paths,
**characterized in that** the displaying of the graphic comprising displaying the graphic as a grid representative of the stage (104), the plurality of points (322) overlaid on the stage (104), and the one or more paths connecting the plurality of points (322).

12. The method as defined in claim 11, wherein the input defining the plurality of points (322) comprises at least one of: coordinates of the plurality of points on the stage, a number of rows of the plurality of points, a number of columns of the plurality of points, a number of the plurality of points, dimensions of the one or more test specimens, a position of an initial one of the plurality of points, a position of a final one of the plurality of points, or a change in position between sequential ones of the plurality of points.

13. The method as defined in claim 11, wherein the receiving of the input comprises receiving a direct selection of one or more of the plurality of points (322) via an input device (252).

14. The method as defined in claim 11, wherein the controlling of the stage actuator (234) comprises controlling the stage actuator (234) to move the stage (104) at least one of linearly, rotationally, or radially.

15. The method as defined in claim 11, further comprising indicating, via the user interface (250), that one or more of the plurality of points (322) are outside bounds of the stage (104).

## Patentansprüche

1. System (100) zum automatisierten Prüfen von einem oder mehreren Prüfkörpern, das System aufweisend:
einen Objekttisch (104), der zum Befestigen eines oder mehrerer Prüfkörper (102) konfiguriert ist;
einen oder mehrere Aktuatoren (234), die zum Anordnen der Position des Objekttisches (104) und des einen oder der mehreren Prüfkörper (102) konfiguriert sind;
eine Benutzeroberfläche (250), konfiguriert zum:
Empfangen von Eingaben, die eine Prüfsequenz einer Vielzahl von Punkten (322) definieren, die an dem einen oder den mehreren Prüfkörpern zu prüfen sind; und
Anzeigen einer Grafik, die die Positionen der Vielzahl von Punkten (322) auf dem einen oder den mehreren Prüfkörpern und einen oder mehrere Pfade anzeigt, die der Objekttisch (104) zum Überqueren der Vielzahl von Punkten während des Prüfens der Prüfsequenz nehmen muss; und
Steuerschaltung (238), die zum Steuern eines Prüfvorganges der Prüfsequenz gemäß der Vielzahl von Punkten (322) und dem einen oder den mehreren Pfaden konfiguriert ist, **dadurch gekennzeichnet, dass** die Benutzeroberfläche (250) zum Anzeigen der Grafik als ein Gitter konfiguriert ist, das den Objekttisch (104), die Vielzahl von Punkten (322), die dem Objekttisch (104) überlagert sind, und den einen oder die mehreren Pfade, die die Vielzahl von Punkten (322) verbinden, darstellt.

2. System (100) nach Anspruch 1, wobei die
Steuerschaltung (238) zum Berechnen des Pfades basierend auf der Vielzahl von Punkten (322) konfiguriert ist.

3. System (100) nach Anspruch 1, wobei die Eingabe, die die Prüfsequenz der Vielzahl von Punkten (322) definiert, zumindest eines aufweist von: Koordinaten der Vielzahl von Punkten auf dem Objekttisch, einer Anzahl von Zeilen der Vielzahl von Punkten, einer Anzahl von Spalten der Vielzahl von Punkten, einer Anzahl der Vielzahl von Punkten, Abmessungen des einen oder der mehreren Prüfkörper, einer Position eines anfänglichen einen der Vielzahl von Punkten, einer Position eines letzten einen der Vielzahl von Punkten oder einer Positionsänderung zwischen aufeinanderfolgenden der Vielzahl von Punkten.

4. System (100) nach Anspruch 1, wobei die Eingabe eine direkte Auswahl von einem oder mehreren der Vielzahl von Punkten (322) über eine Eingabevorrichtung (252) aufweist, wobei die Eingabevorrichtung (252) zumindest eines von einem Joystick, einer Maus oder einem Touchscreen aufweist.

5. System (100) nach Anspruch 1, wobei die Benutzeroberfläche (250) zum Anzeigen sequentieller, mit der Vielzahl von Punkten (322) verbundener Angaben konfiguriert ist, um eine Reihenfolge anzugeben, in der die Vielzahl von Punkten während des Prüfvorgangs zu prüfen ist.

6. System (100) nach Anspruch 1, wobei die Benutzeroberfläche zum Angeben eines Anfangspunkts der Vielzahl von Punkten (322) und zum Anzeigen des einen oder der mehreren Pfade unter Nutzung eines oder mehrerer Richtungsanzeiger konfiguriert ist.

7. System nach Anspruch 1, wobei die Benutzeroberfläche zum Angeben konfiguriert ist, dass einer oder mehrere der Vielzahl von Punkten außerhalb der Grenzen des Objekttisches liegen.

8. System (100) nach Anspruch 1, wobei die Benutzeroberfläche (250) zum Angeben einer aktuellen Position des Objekttisches (104) über die Grafik konfiguriert ist, oder wobei die Benutzeroberfläche (250) zum Anzeigen einer zweiten Grafik konfiguriert ist, die eine Gesamtheit des Objekttischs (104) darstellt.

9. System (100) nach Anspruch 1, wobei der Objekttisch (104) zum Bewegen des Prüfkörpers zumindest eines von linear, rotatorisch oder radial konfiguriert ist.

10. System (100) nach Anspruch 9, wobei die Steuerschaltung (238) zum Steuern des Objekttischaktuators unter Nutzung von zumindest einem von euklidischen Koordinaten mit einer oder mehreren Dimensionen, Polarkoordinaten, sphärischen Koordinaten oder zylindrischen Koordinaten konfiguriert ist.

11. Verfahren zum automatisierten Prüfen von einem oder mehreren Prüfkörpern (102), das Verfahren aufweisend:
Befestigen eines oder mehrerer Prüfkörper (102) auf einem Prüfobjekttisch (104);
Empfangen, über eine Benutzeroberfläche (250), einer Eingabe, die eine Prüfsequenz einer Vielzahl von auf dem einen oder mehreren Prüfkörpern (102) zu prüfenden Punkten (322) definiert;
Anzeigen, über die Benutzeroberfläche (250), einer Grafik, die die Positionen der Vielzahl von Punkten (322) auf dem einen oder den mehreren Prüfkörpern und einen oder mehrere Pfade anzeigt, die der Objekttisch (104) zum Überqueren der Vielzahl von Punkten (322) während des Prüfens der Prüfsequenz nehmen muss; und
Durchführen, über eine Steuerschaltung (238) und, eines Prüfvorgangs der Prüfsequenz durch Steuern eines Objekttischaktuators (234) zum Bewegen des Prüfobjekttisches (104) gemäß der Vielzahl von Punkten (322) und dem einen oder mehreren Pfaden,
**dadurch gekennzeichnet, dass** das Anzeigen der Grafik das Anzeigen der Grafik als ein Gitter aufweist, das den Objekttisch (104), die Vielzahl von Punkten (322), die auf dem Objekttisch (104) überlagert sind, und den einen oder die mehreren Pfade, die die Vielzahl von Punkten (322) verbinden, darstellt.

12. Verfahren nach Anspruch 11, wobei die Eingabe, die die Vielzahl von Punkten (322) definiert, zumindest eines aufweist von: Koordinaten der Vielzahl von Punkten auf dem Objekttisch, einer Anzahl von Zeilen der Vielzahl von Punkten, einer Anzahl von Spalten der Vielzahl von Punkten, einer Anzahl der Vielzahl von Punkten, Abmessungen des einen oder der mehreren Prüfkörper, einer Position eines anfänglichen einen der Vielzahl von Punkten, einer Position eines letzten einen der Vielzahl von Punkten oder einer Positionsänderung zwischen aufeinanderfolgenden der Vielzahl von Punkten.

13. Verfahren nach Anspruch 11, wobei das Empfangen der Eingabe das Empfangen einer direkten Auswahl von einem oder mehreren der Vielzahl von Punkten (322) über eine Eingabevorrichtung (252) aufweist.

14. Verfahren nach Anspruch 11, wobei das Steuern des Objekttischaktuators (234) das Steuern des Objekttischaktuators (234) zum Bewegen des Objekttisches (104) zumindest eines von linear, rotatorisch oder radial aufweist.

15. Verfahren nach Anspruch 11, ferner aufweisend das Angeben, über die Benutzeroberfläche (250), dass einer oder mehrere der Vielzahl von Punkten (322) außerhalb der Grenzen des Objekttisches (104) liegen.

## Revendications

1. Système (100) pour réaliser un test automatisé d'une ou plusieurs éprouvettes, le système comprenant :
un étage (104) configuré pour fixer une ou plusieurs éprouvettes (102) ;
un ou plusieurs actionneurs (234) configurés pour positionner l'étage (104) et la ou les éprouvettes (102) ;
une interface utilisateur (250) configurée pour :
recevoir une entrée définissant une séquence de test d'une pluralité de points (322) à tester sur la ou les éprouvettes ; et
l'affichage d'un graphique indicatif des positions de la pluralité de points (322) sur la ou les éprouvettes et un ou plusieurs trajets devant être suivis par l'étage (104) pour traverser la pluralité de points durant le test de la séquence de test ; et
un circuit de commande (238) configuré pour commander un processus de test de la séquence de test en fonction de la pluralité de points (322) et du ou des trajets, **caractérisé en ce que** l'interface utilisateur (250) est configurée pour afficher le graphique sous la forme d'une grille représentative de l'étage (104), la pluralité de points (322) étant superposée sur l'étage (104), et le ou les trajets reliant la pluralité de points (322).

2. Système (100) selon la revendication 1, dans lequel le circuit de commande (238) est configuré pour calculer le trajet sur base de la pluralité de points (322).

3. Système (100) selon la revendication 1, dans lequel l'entrée définissant la séquence de test de la pluralité de points (322) comprend au moins un parmi : les coordonnées de la pluralité de points sur l'étage, un nombre de rangées de la pluralité de points, un nombre de colonnes de la pluralité de points, un nombre de la pluralité de points, les dimensions d'une ou de plusieurs éprouvettes, une position d'un point initial parmi la pluralité de points, une position d'un point final parmi la pluralité de points, ou un changement de position entre des points séquentiels parmi la pluralité de points.

4. Système (100) selon la revendication 1, dans lequel l'entrée comprend une sélection directe d'un ou plusieurs points parmi la pluralité de points (322) via un dispositif d'entrée (252), dans lequel facultativement le dispositif d'entrée (252) comprend au moins un parmi un manette, une souris ou un écran tactile.

5. Système (100) selon la revendication 1, dans lequel l'interface utilisateur (250) est configurée pour afficher des indices séquentiels associés à la pluralité de points (322) pour indiquer un ordre dans lequel la pluralité de points doivent être testés durant le processus de test.

6. Système (100) selon la revendication 1, dans lequel l'interface utilisateur est configurée pour indiquer un point initial parmi la pluralité de points (322) et pour afficher le ou les trajets à l'aide d'un ou plusieurs indicateurs directionnels.

7. Système selon la revendication 1, dans lequel l'interface utilisateur est configurée pour indiquer qu'un ou plusieurs parmi la pluralité de points sont à l'extérieur des limites de l'étage.

8. Système (100) selon la revendication 1, dans lequel l'interface utilisateur (250) est configurée pour indiquer une position actuelle de l'étage (104) via le graphique, ou dans lequel l'interface utilisateur (250) est configurée pour afficher un deuxième graphique représentatif d'un ensemble de l'étage (104) .

9. Système (100) selon la revendication 1, dans lequel l'étage (104) est configuré pour déplacer l'éprouvette d'au moins une parmi une manière linéaire, rotative ou radiale.

10. Système (100) selon la revendication 9, dans lequel le circuit de commande (238) est configuré pour commander l'actionneur d'étage à l'aide d'au moins une parmi des coordonnées euclidiennes ayant une ou plusieurs dimensions, des coordonnées polaires, des coordonnées sphériques ou des coordonnées cylindriques.

11. Procédé pour réaliser un test automatisé d'une ou plusieurs éprouvettes (102), le procédé comprenant :
la fixation d'une ou plusieurs éprouvettes (102) à un étage de test (104) ;
la réception, via une interface utilisateur (250), d'une entrée définissant une séquence de test d'une pluralité de points (322) à tester sur la ou les éprouvettes (102) ;
l'affichage, via l'interface utilisateur (250), d'un graphique indicatif des positions de la pluralité de points (322) sur la ou les éprouvettes et d'un ou plusieurs trajets devant être suivis par l'étage (104) pour traverser la pluralité de points (322) durant le test de la séquence de test ; et
la réalisation, via un circuit de commande (238) et, un processus de test de la séquence de test par la commande d'un actionneur d'étage (234) pour déplacer l'étage de test (104) conformément à la pluralité de points (322) et au ou aux trajets,
**caractérisé en ce que** l'affichage du graphique comprend l'affichage du graphique sous la forme d'une grille représentative de l'étage (104), la pluralité de points (322) étant superposés sur l'étage (104), et le ou les trajets reliant la pluralité de points (322).

12. Procédé selon la revendication 11, dans lequel l'entrée définissant la pluralité de points (322) comprend au moins un parmi : les coordonnées de la pluralité de points sur l'étage, un nombre de rangées de la pluralité de points, un nombre de colonnes de la pluralité de points, un nombre de la pluralité de points, les dimensions de la ou des éprouvettes, une position d'un point initial parmi la pluralité de points, une position d'un point final parmi la pluralité de points, ou un changement de position entre des points séquentiels parmi la pluralité de points.

13. Procédé selon la revendication 11, dans lequel la réception de l'entrée comprend la réception d'une sélection directe d'un ou plusieurs points parmi la pluralité de points (322) via un dispositif d'entrée (252).

14. Procédé selon la revendication 11, dans lequel la commande de l'actionneur d'étage (234) comprend la commande de l'actionneur d'étage (234) pour déplacer l'étage (104) d'au moins une parmi une manière linéaire, rotative ou radiale.

15. Procédé selon la revendication 11, comprenant en outre l'indication, via l'interface utilisateur (250), qu'un ou plusieurs parmi la pluralité de points (322) sont à l'extérieur des limites de l'étage (104).
